# EUROPÄISCHE PATENTSCHRIFT

(11) **EP 2 683 961 B1**
(45) Veröffentlichungstag und Bekanntmachung des Hinweises auf die Patenterteilung: **29.07.2015**
(21) Anmeldenummer: 12711110.2
(22) Anmeldetag: 05.03.2012
(51) Int. Cl.: F16F 1/38

(54) **DURCH MATERIALVERDRÄNGUNG VORSPANNBARE BUCHSE UND MIT DIESER BUCHSE AUSGESTATTETES LAGER**
BUSHING WHICH CAN BE PRETENSIONED BY MATERIAL DISPLACEMENT AND BEARING EQUIPPED WITH SAID BUSHING
COUSSINET POUVANT ÊTRE PRÉCONTRAINT PAR REFOULEMENT DE MATÉRIAU ET PALIER ÉQUIPÉ DE CE COUSSINET

(30) Priorität: 09.03.2011 EP 11001935
(43) Veröffentlichungstag der Anmeldung: 15.01.2014
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2012/000971
(87) Internationale Veröffentlichungsnummer: WO 2012/119748

(56) Entgegenhaltungen:
- WO-A1-2007/042934
- WO-A1-2009/121552
- DE-A1-102006 030 967
- DE-A1-102006 031 348
- DE-A1-102008 007 092
- US-A- 2 414 743

## Beschreibung

Die Erfindung betrifft ein Buchse und ein Lager, das mit der betreffenden Buchse ausgestattet ist. Die erfindungsgemäße Buchse ist auch nach Einbau in das Lager vorspannbar, bzw. kalibrierbar und zwar durch Verdrängung von elastomeren Material im Inneren der Buchse, wobei die Verdrängung durch unterschiedliche Press- und Spannmittel in der Buchse und / oder im umgebenden Lager erfolgt. Die elastomere Buchse ist so gestaltet, dass durch die Verdrängung des elastomeren Materials vom Inneren der Buchse, die selbe verformt und vorgespannt wird und so gegen das Lagerauge verspannt wird. Die Vorspannung ist dabei regulierbar und über einen größeren Bereich reversibel.

Bei Lagerbuchsen besteht in der Regel das Problem, dass sie kalibriert werden müssen. Im Allgemeinen müssen die Buchsen zur Montage in ein Auge eingepresst werden bzw. auch auf einen Bolzen aufgepresst werden. Für die Kalibrierung wird im Allgemeinen der Außenring der Buchse nach dem Stand der Technik durch ein Loch gepresst, so dass der Außendurchmesser der Buchse sich verkleinert und somit das zwischen der Außenbuchse und der Innenbuchse befindliche Elastomer vorgespannt wird. Alternativ dazu wird ein Bolzen durch die Innenhülse der Buchse gepresst und diese aufgearbeitet, so dass auch dadurch das Elastomer in der Buchse verdichtet (Kalibrierung) wird. In der Regel geschehen diese Maßnahmen vor Einbau in das vorgesehene Lager. Überdies ist durch diese Maßnahmen nur schwer eine Feinjustierung vorzunehmen.

Die Erfindung löst im Wesentlichen zwei Probleme: 1. das Kalibrieren der Buchse und 2. das Einpressen in ein Rohr bzw. Aufpressen auf einen Bolzen.

Durch die angebotenen und im Weiteren näher beschriebene Lösung wird das im mittleren Bereich der Buchse befindliche Elastomervolumen, welches im Betriebszustand der Buchse, bzw. bei Belastung im Betriebszustand nur eine geringe Verformung erfährt und so wenig zur notwendigen Vorspannung der Buchse beitragen kann, durch die räumliche Verbindung zu einem ebenfalls mit elastischen Material ausgefüllten Pressbereich unter Einwirkung von Spannmitteln vergrößert. Dadurch wird die Buchse vorgespannt und komprimiert. Durch den dadurch höheren Druck verformt sich die Außenbuchse nach außen und gegebenenfalls die Innenbuchse nach innen, so dass das Bauteil im eingebauten Zustand verklemmt wird.

Gegenstand der Erfindung ist somit eine im eingebauten Zustand vorspannbare kalibrierbare runde Elastomerbuchse (16), umfassend eine verformbare Außenhülse (5) und ein kompaktes anflanschbares Innenteil (4), welche beide miteinander durch eine Elastomerschicht (1) verbunden sind, wie vom Dokument DE 10 2008 007 092 A1 schon bekannt, wobei die Buchse eine als Pressbereich fungierende zusätzliche Elastomerschicht (2)(25) umfasst, welche mit der Elastomerschicht (1) in Verbindung steht und durch mechanische Press-, oder Spannmittel (3)(4a)(5a)(8)(19)(21)(24)(12)(13)(7) (20)(21)(22), und / oder hydraulische Press-, oder Spannmittel (12)(13)(14)(17) zusammengedrückt wird, so dass das aus dem Pressbereich (2) herausgedrückte in das Elastomerschichtvolumen (1) hineingedrückte Elastomermaterial die Elastomerschicht (1) komprimiert, damit die Außenwand (5) der Buchse nach außen radial verformt, und so eine Verspannung der Buchse (16) mit einem mit der Buchse verbundenen, umgebenden Bauteil (10) bewirkt

Vorzugsweise ist das Elastomermaterial des Pressbereichs (2) von unterschiedlicher Härte, vorzugsweise weicher, im Vergleich zu dem Elastomermaterial der Buchse selbst.

Die Ausführungsformen der erfindungsgemäßen Gegenstände lassen sich in drei Kategorien unterteilen:
(i) Ausführungsformen, bei denen der elastomere Pressbereich (2) einen separaten Teil der Elastomerschicht (1) darstellt und somit zwischen Außenhülse (5) und Innenteil (4) angeordnet ist, wobei die Steifigkeiten der Bereiche (1) und (2) unterschiedlich sein kann;
(ii) Ausführungsformen, bei denen der elastomere Pressbereich im Inneren des Innenteils (4) untergebracht ist und mit dem Elastomerbereich (1) der Buchse (16) durch elastomere Kanäle in Verbindung steht; und
(iii) Ausführungsformen, bei denen der elastomere Pressbereich in dem mit der Buchse verbundenen, umgebenden Bauteil (10) angeordnet ist, und ebenfalls mit dem Elastomerbereich (1) der Buchse (16) durch elastomere Kanäle in Verbindung steht.

### Ausführungsformen der Kategorie (i):

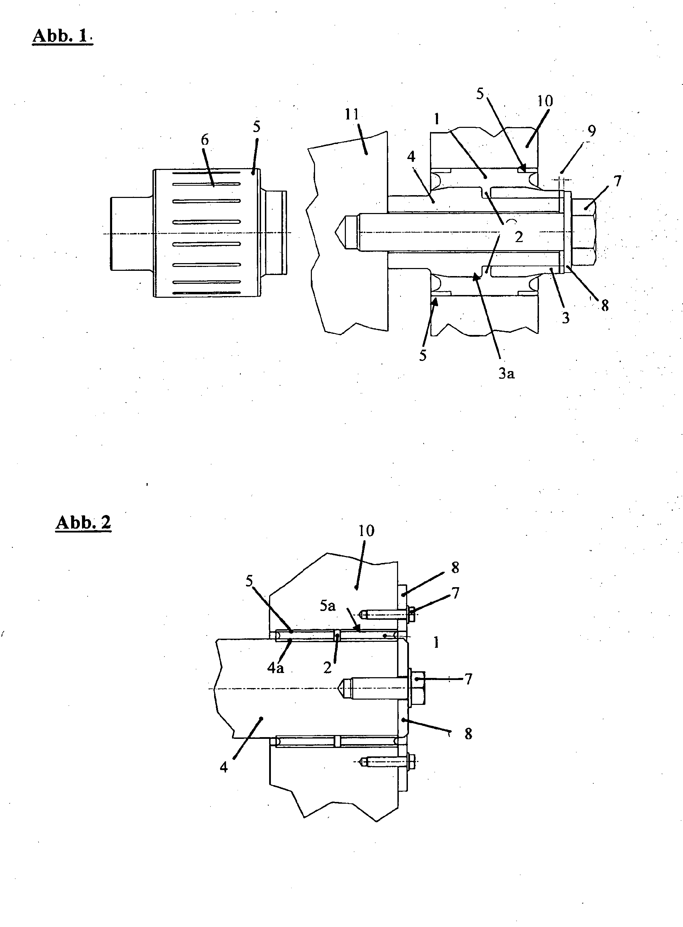

Gegenstand der Erfindung ist eine vorspannbare Elastomerbuchse bei der die als Pressbereich fungierende zusätzliche Elastomerschicht (2) ganz oder teilweise einen Bereich der Elastomerschicht (1) zwischen der Außenwand (5) und dem Innenteil (4) oder (4a) einnimmt (Abb. 1 - 6, 9, 12)

Gegenstand der Erfindung ist insbesondere eine entsprechende Elastomerbuchse, bei welcher das anflanschbare kompakte Innenteil (4) zusätzlich von einer formgleichen Innenhülse (4a) umschlungen ist, in welcher das Innenteil (4) passgenau steckt, und welche anstelle des Innenteils (4) mit dem Elastomer (1) und der inneren Wandung der vorzugsweise zylindrischen Außenhülse (5) der Elastomerbuchse verbunden ist. Bei dieser Lösung kann das kompakte Innenteil (4) auch ganz fehlen, insbesondere dann, wenn das Lagerteil (10) nicht über das Innenteil (4) sondern anderweitig mit dem Lagerteil (11) verbunden werden kann. Das Innenteil (4) ist entweder ein fester vorzugsweise Metallkern, kann aber auch ein Elastomerkern von hoher Steifigkeit sein. Das Innenteil (4) bzw. die Innenhülse (4a) weisen in der Regel eine zylindrische Form auf; sie können aber auch jede andere sinnvolle Form besitzen.

In einer gebräuchlichen und relativ einfachen Ausführungsform der Erfindung wird der Pressbereich, bzw. das Pressvolumen (2) von einem Teil des Volumens zwischen der äußeren Hülse (5) und der inneren Hülse (4a), bzw. der Mantelfläche des Innenteils (4) gebildet. Wie in den Abbildungen 1, 6 und 9 gezeigt, kann dieser Pressbereich (2) außen auf dem Innenteil (4) oder der Innenhülse (4a) angeordnet sein. Er wird in der genannten Ausführungsform durch eine als Pressmittel dienende Schiebehülse (3) und einem Anschlag (3a) gebildet, wobei die Schiebehülse (3) das Innenteil (4) bzw. die Innenhülse (4a) teilweise umschlingt, und entlang diesem/dieser axial durch geeignete Spannmittel (7) um den Kompressionsweg (9) in den Elastomerbereich (2) hinein verschoben werden kann. Der Anschlag (3a) kann ein separates Teil sein, welches am Innenteil (4) oder an der Innenhülse (4a) befestigt oder angebracht ist, oder selbst ein integratives Teil der Bauteile (4) (5a) ist.

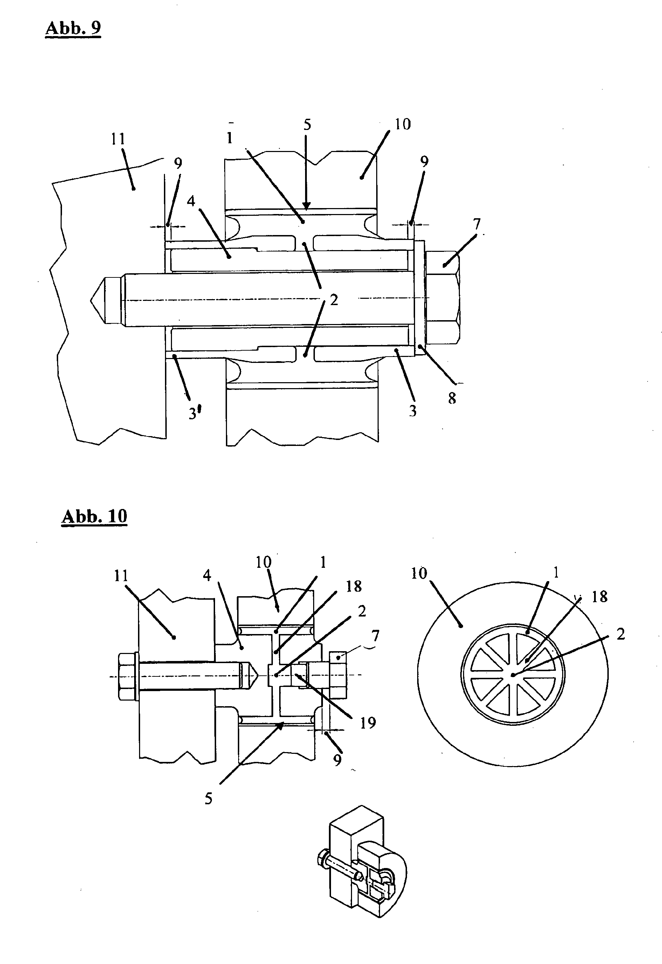

Wie in Abb. 9 gezeigt, können auch zwei auf das Innenteil (4) gesteckte axial gegeneinander verschiebbare Schiebehülsen (3)(3'), zwischen denen sich des Pressvolumen (2) befindet, eingesetzt werden. In diesem Fall ist der Anschlag (3a) überflüssig.

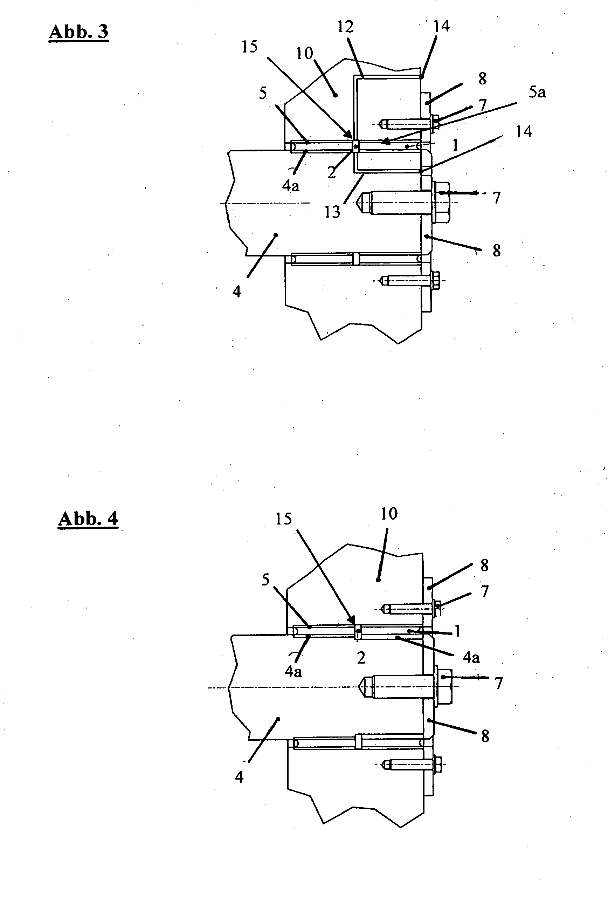

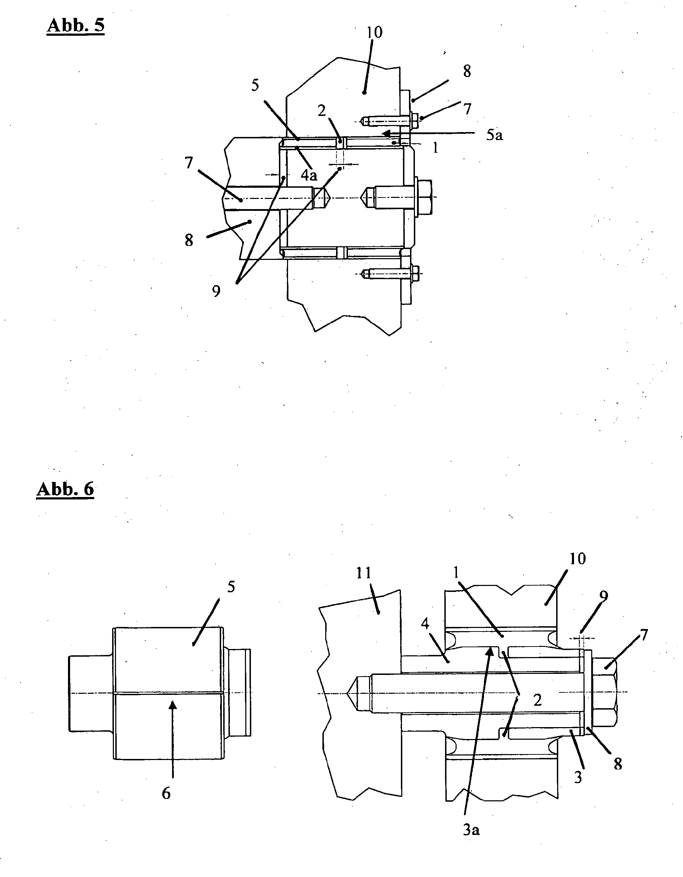

Der Pressbereich (2) kann aber auch oder zusätzlich auf der gegenüberliegenden Seite an der Innenwand der Außenhülse (5) angeordnet sein. Er kann aber auch ringförmig den gesamten Raum zwischen Außenhülse (5) und dem Innenteil (4) bzw. der diesen gegebenenfalls umgebenden Innenhülse (4a) ausfüllen, so dass das Elastomervolumen (1) durch den vorzugsweise ringförmigen radialen Ring des Pressbereiches (2) in zwei Bereiche aufgeteilt wird. Bei diesen Varianten (Abb. 2 - 5) der erfindungsgemäßen Buchse kann der Pressbereich (2) nicht nur durch die beschriebene Schiebehülse (3) sondern auch oder zusätzlich durch eine Schiebehülse (5a), komprimiert werden, welche an der inneren Wand der Außenhülse (5) geführt und durch Spannmittel axial verschoben werden kann. Gegenstand der Erfindung ist somit eine vorspannbare Elastomerbuchse, bei welcher das Pressmittel eine Schiebehülse (3) ist, die das Innenteil (4) oder die Innenhülse (4a) teilweise umschlingt, und entlang diesem/dieser axial durch die Spannmittel (7) um den Kompressionsweg (9) in den Elastomerbereich (2) hinein verschoben werden kann. Alternativ ist Gegenstand der Erfindung auch eine vorspannbare Elastomerbuchse, bei welcher das Pressmittel eine Schiebehülse (5a) ist, welche innen am der Außenhülse (5) entlang axial durch die Spannmittel (7) um den Kompressionsweg (9) in den Elastomerbereich (2) hinein verschoben werden kann (Abb. 5, 6). In einer Weiterführung dieser Ausführungsform umfasst die erfindungsgemäße Elastomerbuchse zwei in radialer Richtung gegenüberliegende Schiebehülsen (3) und (5a), die entlang dem Innenteil (4) bzw. (4a) und der Innenwand der Außenhülse (5) durch Spannmittel (7) verschoben werden können, um den angrenzenden Pressbereich (2) zu komprimieren (Abb. 3, 5). Letztlich ist auch eine Elastomerbuchse einsetzbar, welche vier Schiebehülsen (3)(3') und (5a)(5a') aufweist, wobei die Schiebehülsen (3)(3') gegeneinander verschoben werden können, ebenso wie die Schiebehülsen (5)(5') (Abb. 9).

Eine andere Ausführungsvariante der Erfindung verzichtet zumindest teilweise auf gesonderte Schiebehülsen (3)(3')(5a)(5a'). Die Kompression des Pressbereiches (2) erfolgt hier über die axiale Verschiebung der Wandungen der Außenhülse (5) und / oder der Innenhülse (4a) bzw. des Innenteils (4) durch Spannmittel. Hierzu weist beispielsweise die Wand der Außenhülse (5) eine ringförmige oder eine ringsegmentförmige Öffnung (15) oder einen entsprechenden umlaufenden Schlitz auf. Dieser Schlitz, bzw. diese Öffnung (15) bildet den Pressbereich (2) oder zumindest einen Teil des Pressbereiches. Wie in den Abbildungen 2 und 3 gezeigt, kann der Pressbereich sich auch im Durchmesser der genannten Öffnungen von der Außenhülse bis zum Innenteil bzw. ggf. der Innenhülse erstrecken, wodurch der Elastomerbereich (1) in zwei Bereiche geteilt wird, wobei allerdings all genannten Bereiche in Verbindung miteinander stehen. Die Pressmittel sind in dieser Ausführungsform also die genannten Wandbereiche der Buchse (16) selbst. Erfindungsgemäß können auch Kombinationen dieser Ausführungsform mit der Ausführungsform, welche Schiebehülsen benützt, eingesetzt werden.

Gegenstand der Erfindung ist somit vorspannbare Elastomerbuchse, wobei im Bereich der Elastomerschicht (2) die Wand der Außenhülse (5) eine umlaufende oder teilweise umlaufende Öffnung (15) aufweist, welche vorzugsweise vollständig durch Elastomermaterial ausgefüllt ist und den elastomeren Pressbereich (2) darstellt. Gegenstand der Erfindung ist auch eine entsprechende Buchse, bei der im Bereich der Elastomerschicht (2) die Wand der Innenhülse (4a) oder der Außenwand des Innenteils (4) eine umlaufende oder segmentweise Öffnung (15) aufweist, welche vorzugsweise vollständig durch Elastomermaterial ausgefüllt ist und den elastomeren Pressbereich (2) darstellt, ggf zusammen mit dem Elastomerbereich der Öffnung (15) in der Außenhülse (5). Vorzugsweise umfasst erfindungsgemäß der Pressbereich (2) zusätzlich das Elastomervolumen im Bereich der Öffnung (15) zwischen der Außenhülse (5) und dem gegenüberliegenden Innenteil (4) bzw. der Innenhülse (4a).

In einer weiteren besonderen Ausführungsform dieser mit Öffnungen (15) versehenen Buchsen sind eine oder mehrere der Öffnungen (15) mit hydraulischen Spann- oder Pressmitteln (12,13,14) oder mechanischen Spann- oder Pressmitteln (21,22) verbunden, durch welche die Vorspannung der elastomeren Bereiche (1) und (2) vor und während des Betriebes eingestellt und reguliert werden kann, ggf. auch zusätzlich zu den schon beschriebenen Spann- und Pressmitteln. Insbesondere sind hier hydraulische Druckleitungen (12, 13) mit Druckventilen, welche die Hydraulikflüssigkeit gegen die Elastomerchicht (2) des Pressbereiches drücken (Abb. 3).

In einer besonderen Ausführungsform weist die erfindungsgemäße vorspannbare Elastomerbuchse einen umlaufenden passenden Kolbenring (21) oder ein oder mehrere Kolbenringsegmente (21) auf sowie eine oder mehrere Spannschrauben (22) oder ähnliche Spannmittel, welche radial im zu verspannenden Lagerteil (10) angeordnet sind und mit deren Hilfe der Kolbenring oder die Kolbenringsegmente in die Öffnungen (15) gepresst werden können und somit den Pressbereich (2) und den Elastomerbereich (1) komprimieren oder dekomprimieren.

Bei den beschriebenen Ausführungsformen in dieser Kategorie, welche eine Öffnung (15) in der Wand der Außenhülse (5) und ggf. in der Innenhülse (4a) aufweisen, kann der Pressbereich (2) ausschließlich auf das durch die Öffnung (15) entstandene zusätzliche Volumen beschränkt sein, sofern diese Volumen nicht kleiner ist als 5 - 15% des Verdrängungsvolumens der Elastomerschicht (1). Vorzugsweise umfasst der Pressbereich (2) bei diesen Ausführungsformen den ganzen Bereich zwischen der Außenhülse (5) und dem Innenteil (4) oder ggf. der Innenhülse (4a), erstreckt sich also quer über die Dicke der Elastomerschicht (1), die durch den Pressbereich (2) ggf. mit anderer Steifigkeit in radialer Richtung unterbrochen wird.

### Ausführungsformen der Kategorie (ii):

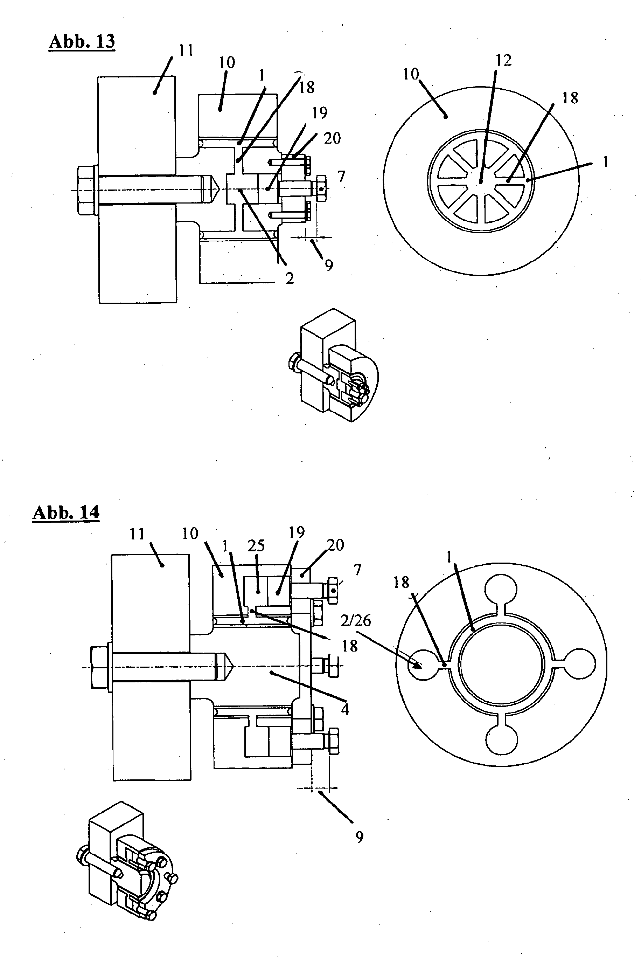

Bei diesen Ausführungsformen der Erfindung befindet sich der elastomere Pressbereich (2) im Inneren des kompakten Innenteils (4), wie in den Abbildungen 10 und 13 dargestellt. Hierzu weist das Innenteil (4) radiale Bohrungen bzw. Kanäle (18) in vorzugsweise einer Ebene auf die im Inneren des Teils (4) in dem Pressbereich (2) münden. Die Bohrungen oder Kanäle (18) sind wiederum ausgefüllt mit elastischen Material, vorzugsweise mit geringerer Steifigkeit als in der Elastomerschicht (1).

In einer besonderen Ausführungsform dient als Pressmittel ein Kolben (19), welche mittig bzw. zentrisch im Innenteil (4) angeordnet ist und durch Spannmittel, beispielsweise einer Spannschraube (7), axial in den Pressbereich (2) hineingedrückt wird, und dort Elastomermaterial durch die Kanäle (18) in den Elastomerbereich (1) verdrängt. Gegenstand der Erfindung ist daher vorspannbare Elastomerbuchse, bei welcher der als Pressvolumen fungierenden Elastomerbereich (2) im Inneren des Innenteils (4) angeordnet ist, welches mindestens eine, vorzugsweise zwei bis sechs radiale, mit elastomeren Material gefüllte Bohrungen (18) in einer Ebene senkrecht zur Achse der Buchse (16) aufweist, die mit dem zentrisch angeordneten elastomeren Pressbereich (2) in Verbindung stehen. Der Kolben (19), der im Innenteil (4) der Buchse angeordnet ist, verdichtet (oder dekomprimiert) bei axialem Verschieben in Richtung des Pressbereiches (2) das dort befindliche Elastomermaterial und über die Bohrungen (18) auch die Elastomerschicht (1) der Buchse (16). Dadurch wird eine Verspannüng (oder Entspannung) der Buchse gegenüber dem Bauelement (10) bewirkt.

### Ausführungsformen der Kategorie (iii):

In einer anderen Ausführungsform ist der Pressbereich (2) weder im Bereich der Elastomerschicht (1) noch im Inneren des Innenteils (4) der Buchse, sondern befindet sich außerhalb der Buchse im Bereich des Lagerteils (10).

Gegenstand der Erfindung ist somit eine vorspannbare Elastomerbuchse bei welcher der elastomere Pressbereich (25)(26) außerhalb der Buchse (16) im mit der Buchse zu verspannenden Bauteil (10) angeordnet ist, wobei er durch mindestens einen mit Elastomermaterial gefüllten Kanal (18) und einer entsprechend geformten Öffnung in der Wand der Außenhülse (5) mit der Elastomerschicht (1) im Inneren der Buchse in Verbindung steht und durch Press- und Spannmittel (7)(19)(20) (24), die auf dem Innenteil (4) und / oder dem Bauteil (10) angeordnet sind, verdichtet werden kann.

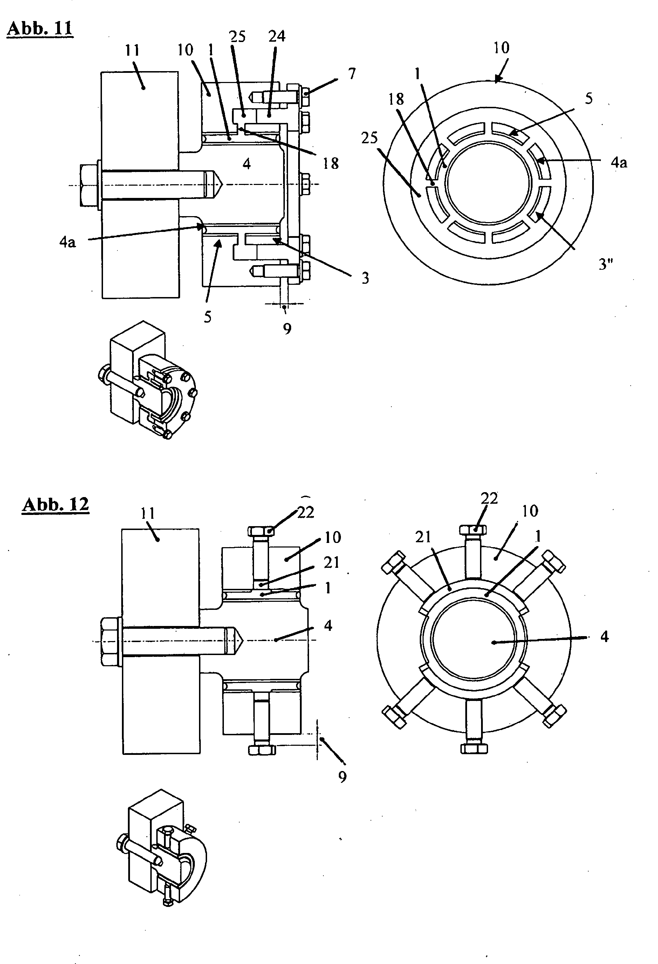

In einer besonderen Ausführungsform bildet der Pressbereich einen runden oder anderweitig geformten Ring, der durch eine entsprechende Auskerbung im Lagerteil (10) gebildet wird und radial um die Buchse (16) in vorzugsweise einer Ebene geführt ist. Alternativ, ist der Pressring nicht geschlossen, sondern in einzelne umlaufende Ringsegmente aufgeteilt. Das Elastomermaterial des Pressringes (2) oder der einzelnen Segmente wird durch einen Kolbenring (24) oder Kolbenringsegmenten, der / die durch Spannmittel (7) axial verschiebbar ist / sind, zusammengedrückt (Abb. 11). Auch in dieser Ausführungsform können Kanäle / Bohrungen (18) vorgesehen sein, welche den Pressbereich (2) mit der Elastomerschicht (1) miteinander verbinden, wobei eine entsprechende Öffnung in der Außenhülse der Buchse (16) vorhanden sein muss. Gegenstand der Erfindung ist somit eine vorspannbare Elastomerbuchse bei welcher der elastomere Pressbereich (25) die Buchse (16) ganz oder segmentweise radial umschlingt, und die in gleicher Weise angeordneten umlaufenden Press- und Spannmittel einen Ringkolben (24) oder ein Segment eines Ringkolbens umfassen, welcher in den Elastomerbereich (25) durch die Spannmittel (7) gedrückt wird.

In einer weiteren Ausführungsform kann der umlaufende oder teilweise umlaufende Pressbereich (2) ersetzt werden durch einzelne Bohrungen oder Kammern (26), welche axial ausgerichtet sind und im Lagerbauteil (10) radial um die Buchse (16) herum angeordnet sind. Die Bohrungen weisen durch Spannmittel (7) axial verschiebbare Kolbenelemente (19) auf, die direkt oberhalb des jeweiligen Pressbereiches (2) angeordnet sind. Durch Verschieben der Kolben kann das elastische Material in jeder Bohrung verdichtet werden. Der erzeugte Druck wird durch Verschieben von Elastomermaterial direkt oder über Kanäle (18) auf die Elastomerschicht zwischen Außenhülse (5) und Innenteil (4), bzw. Innenhülse (4a) übertragen. Hierzu muss allerdings eine entsprechend geformte Öffnung in der Außenhülse der Buchse vorhanden sein (Abb. 14). Gegenstand der Erfindung ist somit eine vorspannbare Elastomerbuchse, bei welcher der elastomere Pressbereich (25) im Bauteil (10) durch mindestens zwei axial angeordnete Bohrungen (26) im Bauteil (10) gebildet wird, die mit kolbenförmigen Pressmitteln (19) und Spannmitteln (7) ausgestattet sind, wobei die Bohrungen um die Buchse (16) herum angeordnet sind, in welchen sich axial die Kolben (19) bewegen.

Durch diese Anordnung, können auch einzelne Kammern (26) unter Druck gestellt werden, so dass die Elastomerkompression nicht zentrisch sondern exzentrisch erfolgen kann. Damit ist eine exzentrische Vorspannung der Buchsen möglich. Dies hat folgende Vorteile: (i) bei Anordnung mehrerer Buchsen an einem Bauteil können Toleranzprobleme ausgeglichen werden; (ii) bei einseitiger Lastrichtung ist es möglich, die Buchse in Lastrichtung durch unsymmetrische Druckausübung stärker zu versteifen als in den anderen Richtungen. Dies bedeutet eine längere Lebensdauer der Buchse.

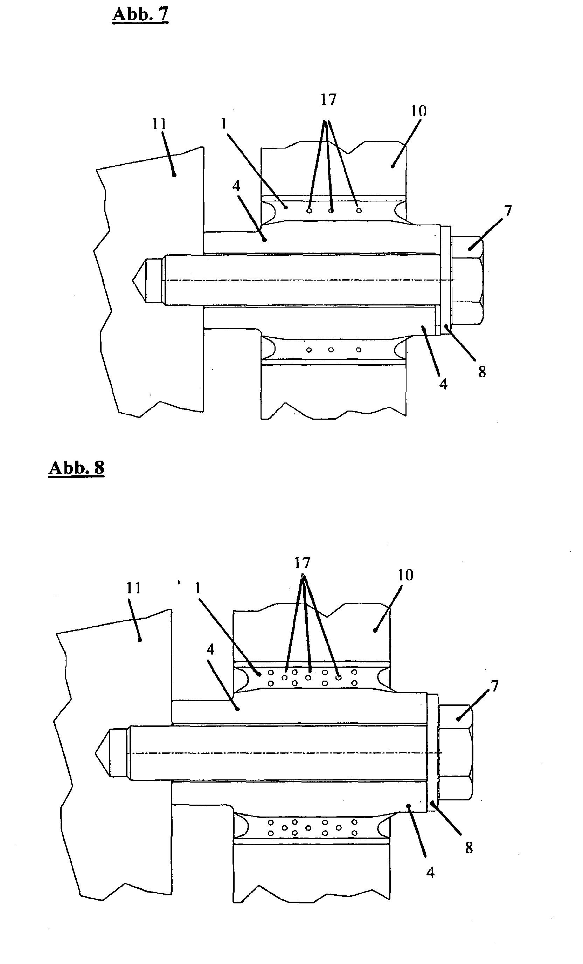

Für alle oben beschriebenen Ausführungsformen gilt das folgende:
(1) Der Pressbereich (2) (25) muss erfindungsgemäß in Verbindung mit dem Elastomermaterial (1) zwischen der Außenhülse (5) und der Innenhülse (4a), bzw. dem Innenkern (4) stehen, so dass elastisches Material aus dem Pressbereich in den Bereich der Elastomermaterials (1) zwischen der Innen- und Außenbuchse gedrückt werden kann, und so die Buchse vorgespannt wird. Hierbei kann, wie unten näher beschrieben, der Pressbereich (2)(25) auch durch mit elastischen Material ausgefüllten Kanälen (18) mit dem Bereich des Elastomermaterials (1) in Verbindung zu stehen.
(2) Als übliche mechanische Spannmittel (7) dienen erfindungsgemäß Spannschrauben. Andere Mittel mit gleicher oder ähnlicher Funktion sind jedoch ebenfalls einsetzbar. Die Spannschrauben können auch durch aktive Stellglieder ersetzt werden, wodurch die Änderung der Buchsensteifigkeit insbesondere während des Betriebes ermöglicht wird.
(3) Der Pressbereich (2) sollte generell 2 - 30% des Volumens der Elastomerschicht (1) sein, vorzugsweise 5 - 20%, insbesondere 5 - 15%. Dies entspricht auch etwa dem zu verdrängenden Volumen. Da das Volumen des Bereichs (2) in das Elastomervolumen der Schicht (1) radial fließen muss, wird nicht das gesamte Volumen ausgepresst, sondern es verbleibt in dem Pressbereich (2) eine Schicht von 1 - 5 mm Dicke.
(4) Die entscheidende Funktion bei der erfindungsgemäße Buchse ist es, wie bereits erwähnt, den elastomeren Pressbereich (2) durch die Presselemente so zu verdichten, dass es zu dem Elastomervolumen (1) hinzugefügt werden kann. In diesem steigt der Druck so an, dass eine Verdichtung über die gesamte Elastomerlänge (1) erfolgt, wobei der Druck in der Mitte der Buchse höher ist und zu den Rändern hin abnimmt.
(5) Generell kann die erfindungsgemäße Buchse (16) einen oder mehrere Längsschlitze (6) aufweisen, welche eine bessere radiale Verformung der Außenhülse (5) bereits bei kleinerem Druck ermöglichen. Diese Schlitze können wie in Abb. 6 dargestellt, über die gesamte Länge der Außenhülse (5) erfolgen oder auch wie in Abb. 1 dargestellt, nur eine begrenzte Länge aufweisen. Die nicht durchgehenden Schlitze haben den Vorteil, obwohl sie aufwendiger herzustellen sind, dass die Buchse länger haltbar ist, da stärkste Elastomerbewegung am Konturauslauf an den Enden der Buchse stattfindet, so dass hier auch die größte Schädigung erfolgt. Bei durchgehenden Schlitzen ist zumindest ein Schlitz erforderlich. Abb. 6 zeigt die Ausführung mit einem Schlitz, welcher das vorzugsweise reversible Aufbiegen des Außenteiles (5) ermöglicht. Bei Ausführungsformen mit einem Schlitz oder mit zwei Schlitzen erfolgt der Einbau in der Weise, dass die Lastrichtung auf die Seiten des geschlossenen Bleches liegt und im geschwächten Bereich des oder der Schlitze keine Lasteinleitung erfolgt. Damit haben die Schlitze keinen negativen Einfluss auf die Haltbarkeit der Elemente der Buchse. Bei Ausführungsformen der erfindungsgemäßen Buchse (16), welche Schlitze (6) enthalten, komprimiert sich das Elastomer auch in bzw. zwischen diesen Schlitzen und verbessert damit gleichzeitig die Reibung zwischen der Außenhülse (5) und dem Lagerbauteil (10), wodurch höhere Lasten in axialer Richtung übertragen werden können. Auf Schlitze kann dann verzichtet werden, wenn das Material des Außenteils (5) so dünn gewählt wird, dass ein reversibles Aufbiegen auch ohne Schlitze leicht möglich ist. In der Regel sind solche Ausführungsformen aber weniger haltbar.
(6) Das Verschieben der entsprechenden Pressmittel (3)(4a)(5a) erfolgt generell durch Andrücken der Vorspannscheibe (8) mit der Vorspannschraube (7). Dabei wird der Vorspannkompressionsweg (9) zurückgelegt und damit ein festgelegtes Volumen aus den Bereich (2) in den Bereich (1) verdrängt. Die erfindungsgemäße Buchse wird in das zu lagernde Bauteil (10) eingeschoben und durch die Aufweitung des Außenteiles (5) in dem zu lagernden Bauteil (10) fixiert. Das kompakte Innenteil (4) kann ein Bolzen jedweder Form sein, der, wie in Abb. 1 gezeigt, axial an das zu lagernde Bauteil Flanschseite (11) angeflanscht werden kann. Je höher die Buchsenkalibrierung bzw. Buchsenvorspannung wird, d.h. je mehr elastischer Werkstoff zwischen dem Außenteil (5) und im Innenteil (4) (4a) der Buchse (16) zugefügt wird, desto höher wird die radiale Steifigkeit der gesamten Buchse. Somit können bei den erfindungsgemäßen Buchsen und Lagern Steifigkeitsschwankungen durch Einlegen unterschiedlich dicker Ausgleichsscheiben (8) welche eine unterschiedliche Vorspannung bewirken, egalisiert werden. Das kompakte Innenteil (4) ist vorzugsweise rund- oder oval-zylindrisch ausgebildet; es kann aber auch eine regelmäßige oder unregelmäßige eckige Form besitzen.
(7) Die Elastomerschicht (1) umfasst übliche synthetische oder natürliche elastische Materialien, welche eine mittlere bis höhere Steifigkeit besitzen. Diese richtet sich letztlich nach dem technischen Einsatzgebiet der Buchse, ihrer Größe und den Kräften, welchen sie ausgesetzt werden sollen. Die Steifigkeit des elastomeren Materials, welche in dem Pressbereichen (2) (25) und in den Kanälen / Bohrungen erfindungsgemäß eingesetzt wird, ist von höchstens gleicher, vorzugsweise aber geringerer Steifigkeit. Die Steifigkeit der Elastomerschicht (1), welche die äußeren und inneren Teile der Buchse miteinander verbindet ist um 10 - 90%, vorzugsweise 10 - 50%, vorzugsweise 15 - 40% höher als das elastomere Material im Pressbereich (2) (25) bzw. den Kanälen und Bohrungen, welchen dem Pressbereich zugeordnet werden können.
(8) Die Elastomerschicht (1) wird erfindungsgemäß, wie beschrieben durch Verdrängung von Elastomermaterial aus dem Pressbereich (2) verdichtetet. Alternativ oder zusätzlich zu dieser Verdichtung kann, insbesondere, falls durch konstruktive Notwendigkeiten, das Verdrängungsvolumen der Pressbereiche nicht ausreichen sollte, die Elastomerschicht (1) weiter durch hydraulische Druckkanäle innerhalb der Elastomerschicht (1) verdichtet und somit die Vorspannung der Buchse weiter erhöht werden. Derartige Druckkanäle in Elastomerschichten und ihre Herstellung sind in der WO 2009/121552 beschrieben. Dabei handelt es sich um in diesem Fall vorzugsweise ringförmig angeordnete hohle Kanäle in der Gummischicht (1) der Buchse, welche bei Zuführung von hydraulischen oder aushärtbaren Flüssigkeiten von außen aufgeweitet werden können, und somit für eine zusätzliche Kompression und Verspannung führen (Abb. 7 und 8).
(9) Alle beschriebenen erfindungsgemäßen Systeme und Ausführungsformen sind passiv. Es sind jedoch auch erfindungsgemäß aktive Systeme umfasst. Bei derartigen aktiven Systemen kann während dem Betrieb von Anlagen die Eigenfrequenz durch Variation der Steifigkeit der erfindungsgemäßen Buchsen in an sich bekannter Weise verändert werden. Dies ist besonders bei Maschinen mit variablen Drehzahlen vorteilhaft. Kritische Frequenzbereiche können damit im Betrieb verschoben werden so dass diese nicht mehr störend sind.
(10) Bei allen beschriebenen Ausführungsformen kann der elastomere Pressbereich (2) ein zusätzliches Volumen bereithalten zur Aufnahme des Elastomermaterials aus den Elastomerbereichen (1) und (2) bei Temperaturerhöhung. Im Allgemeinen besitzen elastische Buchsen ein temperaturabhängiges Steifigkeitsverhalten. Bei steigender Temperatur wird das Elastomermaterial weicher, wodurch die Vorspannung absinkt. Dieser Effekt kann ganz oder teilweise kompensiert werden, in dem man das Elastomer sich bei Temperaturerhöhung ausdehnen lässt, wodurch die Vorspannung wieder erhöht wird. Dies kann erfindungsgemäß durch Bereitstellung eines zusätzlichen Volumens verwirklicht werden. Im einfachsten Fall ist das Volumen des Pressbereiches (2)(25) bei normaler Betriebstemperatur nicht vollständig mit Elastomermaterial ausgefüllt. Bei Erhöhung der Betriebstemperatur kann sich das Elastmermaterial aus den Bereichen (1) und (2) in den verfügbaren Raum ausdehnen. Eine alternative Möglichkeit besteht darin, eine zusätzliche Ausdehnungskammer, welche mit dem Elastomerbereich (2) und/oder (1) verbunden ist, zur Verfügung zu stellen. Gegenstand der Erfindung ist somit eine entsprechende Elastomerbuchse, bei welcher der Pressbereich (2)(25) ein zusätzliches Volumen aufweist, das bei einer gegebenen Temperatur nicht von Elastomermaterial eingenommen wird, bei Temperaturerhöhung jedoch von diesem durch Ausdehnung teilweise oder ganz ausgefüllt wird.
(11) Die erfindungsgemäßen Buchsen sind für den Einsatz von Lagern von Maschinen, Getrieben und anderer technischer Anlagen, bei denen Schwingungen allgemeiner Art gedämpft werden sollen, vorgesehen. Derartige mit den erfindungsgemäßen Buchsen ausgestattet Lager eignen sich insbesondere für den Einsatz in Windkraftanlagen. Gegenstand der Erfindung sind somit auch mit den erfindungsgemäßen Buchsen ausgestatteten Lager und ihre Verwendung zur Reduzierung von Schwingungen, insbesondere in Windkraftanlagen.

### Beschreibung der Abbildungen:

Abb. 1 und 6: zeigen eine erfindungsgemäße Buchse, bei der Pressbereich (2) mittels einer verschiebbaren ringförmigen Hülse (3), die auf das Innenteil (4) einseitig gesteckt ist, und einem Anschlag (3a) auf dem Innenteil komprimiert werden kann, und somit Druck in die Elastomerschicht (1) führt. Die zu erzielende Kompression wird dabei durch den wählbaren Kompressionsweg (9) zwischen Innenteil (4) und der Druckscheibe (8) festgelegt. Als Spannmittel dient einen Schraube (7) welche axial in das Innenteil (4) geschraubt wird. In dieser Ausführungsform dient die Schraube auch zu Verbindung der Lagerteile (10) und (11). Der linke Teil der Abb. 1 stellt die Außenwand der Außenhülse (5) dar mit in diesem Fall vorhandenen mehreren axial ausgerichteten Schlitzen (6). Der linke Teil der Abb. 6 stellt die Außenwand der Außenhülse (5) dar mit in diesem Fall nur einen durchgehenden Schlitz (6).
Abb. 2: zeigt eine weitere Ausführung bei welcher sowohl ein Teil der Außenbuchse (5) als auch einen Teil der Innenbuchse (4) axial durch entsprechende Schiebemittel (3)(5a)(4a) verschoben werden. Somit ist der Querschnitt des Volumens das Maß zwischen Innenteil/Innendurchmesser und Außenteil/Außendurchmesser mal dem Vorspannkompressionsweg. Dadurch kann der Vorspannkompressionsweg (9) deutlich kleiner werden bei gleicher Volumenverschiebung. Oder andersherum: bei kleinem Vorspannenweg kann ein größeres Volumen eingebracht werden. Der Pressbereich (2) ist in dieser Ausführungsform der Bereich unterhalb der Teile (4a) (5a) bzw. (3) und erstreckt sich als Vorspannring über die gesamte Dicke der Elastomerschicht (1), welche dadurch in zwei Hälften unterteilt wird. Die Verspannung erfolgt einseitig über die Elemente (7) und (8).
Abb. 3: zeigt eine Variante der Ausführungsform gemäß Abb. 2. Der Pressbereich wird jedoch zusätzlich durch hydraulische Mittel, welche über eine Druckzuführung (12) im Lagerteil (10) eingeleitet werden, komprimiert. Die hydraulische Flüssigkeit, oder ggf. eine aushärtbare Flüssigkeit, wirkt dabei direkt durch eine entsprechende Öffnung in der Außenhülse (5) auf den elastomeren Pressbereich ein, und verdichtet diesen. Die Druckzuführung kann als einzelne Bohrungen/Kanäle vorgesehen sein oder aber auch als ein im Lagerteil vorgesehener an der Außenfläche der Buchse umlaufender Kanal, welcher an einzelnen Punkten oder über die gesamte Fläche mit dem Pressbereich (2) durch entsprechende Öffnungen in der Außenhülse (5) in Verbindung steht.
   Die Buchse ist somit axial mittig komplett geteilt und der hier als Pressbereich dienende Vorspannring (2) liegt zwischen den Buchsenschalen. Dieser ist über die Leitung (12) entweder durch das Außenteil (10) zum Befüllen durch dem Ventil (14) verbunden. Alternativ kann auch durch die Druckleitung (13) und dem Ventil (14) im Innenteil (4) komprimiert werden. Die Befüllung des hydraulischen Systems kann mit einer Flüssigkeit erfolgen, welche in dem Bauteil verbleibt. Sie kann aber auch einmalig mit einer aushärtenden Elastomerfüllung beschickt werden.
Abb. 4: zeigt eine ähnliche Ausführungsform wie in Abb. 2 dargestellt. Hier kann der als Vorspannring vorliegende Pressbereich (2) durch Teil (5a) und durch die Schiebehülse (3) komprimiert werden.
Abb. 5: entspricht der Abb. 2. In Ergänzung hierzu erfolgt die Verspannung nicht einseitig über eine Seite der Buchse (16), sondern symmetrisch von beiden Stirnseiten der Buchse, also auch über das Lagerteil (11).
Abb. 7 und 8: zeigen eine elastomere Buchse, bei welcher die Vorspannung über durch hydraulische oder aushärtbare Flüssigkeiten aufweitbare Kanäle (17) im Inneren der Elastomerschicht (1) erreicht werden kann. Diese können ringförmig und in unterschiedlichen Durchmessern in Form von einem- oder mehreren Ringen nebeneinander ausgeführt werden. Statt der parallel liegenden Ringe können diese auch spiralförmig angeordnet sein. Die Kanäle werden über ein Ventil, welches nach außen führt, gefüllt.
Abb. 9: zeigt das Prinzip der Ausführungsform der Abb. 1. Hier wird jedoch der Pressbereich (2) durch zwei gegenüberliegende Schiebehülsen (3), die von beiden Seiten der Buchse über das Innenteil (4) gesteckt sind, mittels der Spannmittel (7) und der Druckscheibe (8) entsprechend des einstellbaren Kompressionsweges (9) komprimiert.
Abb. 10 und 13: zeigt eine Ausführungsform, bei welcher der elastomerhaltige Pressbereich (2) im Inneren der Innenteils (4) angeordnet ist. Dieser ist über mehrere elastomerhaltige Kanäle bzw. Bohrungen (18) mit der umlaufenden Elastomerschicht (1) der Buchse verbunden. Die Bohrungen sind radial und in einer Ebene ausgeführt. Sie treffen sich im Inneren des Teils (4) in der mit Elastomer ausgefüllten Presskammer (2), welche durch ein zylindrisches, axial verschiebbares Kolbenelement (19) mittels der Spannschraube (7) verdichtet werden kann.
Abb. 11: zeigt eine erfindungsgemäße Buchse in der der Pressbereich (2) im Gegensatz zu Abb. 10 außerhalb der Buchse (16) in dem Lagerelement (10) angeordnet ist. Der Pressbereich besitzt hierbei die Form eines geschlossenen Ringes, der die Buchse (16) unmittelbar oder wie gezeigt, im Abstand des Durchmessers des ringförmigen Verbindungskanals (18) ganz oder segmentweise umschlingt. Der Pressbereich kann durch einen Ringkolben (24) oder alternativ durch einzelne Ringkolbensegmente (24) verdichtet werden. Der Ring (18) steht unmittelbar mit der Elastomerschicht (1) im Inneren der Buchse durch eine entsprechend geformten Zugang in der Außenhülse (5) in Verbindung.
Abb. 12: zeigt eine erfindungsgemäße Ausführungsform, bei welcher die Außenhülse (5) eine geschlossene oder unterbrochene ringförmige Öffnung gegenüber dem Lagerteil (10) aufweist. In dem Lagerteil ist an dieser Stelle ein passender Ring oder passendes Ringsegment (21) platziert. Als Pressbereich (2) ist hier im Wesentlichen das Volumen anzusehen, das durch die Öffnung in der Buchse entstanden ist. Der Ring bzw. die Ringsegmente (21) werden durch radial angeordnete Schrauben (22), welche in entsprechend ausgerichteten Bohrungen um die Elastomerbuchse herum geführt werden, unter Druck gesetzt, so dass der Pressbereich (2) in der Öffnung und der darunterliegende Elastomerbereich (1) in der Buchse selbst, verdichtet werden können.
Abb. 14: zeigt eine ähnliche erfindungsgemäße Ausführungsform gemäß Abb. 12 Der Pressbereich (2) außerhalb der Buchse (16) im Lagerteil (10) wird hier jedoch durch einzelne separate Bohrungen oder Kammern (26) gebildet, die in axialer Richtung rund um die Buchse (16) angeordnet sind. Entsprechend dienen als Pressmittel zylindrische Kolben (19), die durch Schrauben (7) in das Pressvolumen (2) gedrückt werden können.

Im Folgenden werden die verwendeten Bezugsgrößen näher beschrieben:
- 1: Elastomerschicht zwischen den Schalen der Buchse (16)
- 2: Pressbereich gefüllt mit elastischen Material
- 3; 3': Schiebeteil
- 3a:: Anschlag
- 4: Innenteil (Bolzen)
- 4a: Innenhülse / verschiebbarer Teil Innenteil
- 5: Außenteil /Außenhülse
- 5': Schiebeteil an Außenhülse 5
- 5a: verschiebbarer Teil Außenhülse
- 6: Schlitz im Außenteil
- 7: Vorspannschraube
- 8: Vorspannscheibe
- 9: Kompressionsweg
- 10: Lagerbauteil (Buchsenseite)
- 11: Lagerbauteil (Flanschseite)
- 12: Druckleitung außen
- 13: Druckleitung ihnen
- 14: Füllventil
- 15: Öffnung im Außenteil (5)
- 17: Druckkanal
- 18: Gummikanal
- 19: zylindrischer Kolben
- 20: Platte
- 21: Kolbenring oder Segment davon
- 22: Radiale Schrauben für Ringsegment
- 23: Teilung des Außenteils
- 24: Ringkolben oder Segment davon
- 25: Pressbereich
- 26: axiale zylindrische Bohrung

## Patentansprüche

1. In eingebauten Zustand vorspannbare kalibrierbare runde Elastomerbuchse (16), umfassend eine verformbare Außenhülse (5) und ein kompaktes anflanschbares Innenteil (4), welche beide miteinander durch eine Elastomerschicht (1) verbunden sind, **dadurch gekennzeichnet, dass** die Buchse eine als Pressbereich fungierende zusätzliche Elastomerschicht (2)(25) umfasst, welche mit der Elastomerschicht (1) in Verbindung steht und durch mechanische Press-, oder Spannmittel (3)(4a)(5a)(8)(19)(21)(24)(12)(13)(7) (20)(21)(22), und / oder hydraulische Press-, oder Spannmittel (12)(13)(14)(17) zusammengedrückt wird, so dass das aus dem Pressbereich (2) herausgedrückte in das Elastomerschichtvolumen (1) hineingedrückte Elastomermaterial die Elastomerschicht (1) komprimiert, damit die Außenwand (5) der Buchse nach außen radial verformt, und so eine Verspannung der Buchse (16) mit einem mit der Buchse verbundenen, umgebenden Bauteil (10) bewirkt.

2. Vorspannbare Elastomerbuchse nach Anspruch 1, **dadurch gekennzeichnet, dass** die als Pressbereich fungierende zusätzliche Elastomerschicht (2) ganz oder teilweise einen Bereich der Elastomerschicht (1) zwischen der Außenwand (5) und dem Innenteil (4) einnimmt.

3. Vorspannbare Elastomerbuchse nach Anspruch 1 oder 2, **dadurch gekennzeichnet, dass** das anflanschbare Innenteil (4) zusätzlich von einer formgleichen Innenhülse (4a) umschlungen ist, in welcher das Innenteil (4) passgenau steckt, und welche anstelle des Innenteils (4) mit dem Elastomer (1) und der Außenschale (5) der Elastomerbuchse verbunden ist.

4. Vorspannbare Elastomerbuchse nach Anspruch 2 oder 3, **dadurch gekennzeichnet, dass** die als Pressbereich fungierende Elastomerschicht (2) außen auf dem Innenteil (4) oder der Innenhülse (4a) und / oder innen auf der Außenhülse (5) angeordnet ist.

5. Vorspannbare Elastomerbuchse nach Anspruch 4, **dadurch gekennzeichnet, dass** das Pressmittel eine Schiebehülse (3) ist, welche
(i) innen an der Außenhülse (5) entlang axial durch die Spannmittel (7) um den Kompressionsweg (9) in den Elastomerbereich (2) hinein verschoben werden kann, oder
(ii) das Innenteil (4) oder die Innenhülse (4a) teilweise umschlingt, und entlang diesem/dieser axial durch die Spannmittel (7) um den Kompressionsweg (9) in den Elastomerbereich (2) hinein verschoben werden kann.

6. Vorspannbare Elastomerbuchse nach Anspruch 5, **dadurch gekennzeichnet, dass** zwei gegenüberliegende Schiebehülsen (3) auf dem Innenteil (4) bzw. der Innenhülse (4a) oder an der Innenwand der Außenhülse (5) angebracht sind.

7. Vorspannbare Elastomerbuchse nach Anspruch 2, **dadurch gekennzeichnet, dass** im Bereich der Elastomerschicht (2) die Wand der Außenhülse (5) oder die Wand der Innenhülse (4a) oder die Außenwand des Innenteils (4) eine umlaufende oder teilweise umlaufende Öffnung (15) aufweist, die mit Elastomermaterial gefüllt ist, wobei diese Schicht den Pressbereiches (2) darstellt

8. Vorspannbare Elastomerbuchse nach Anspruch 7, **dadurch gekennzeichnet, dass** der elastomere Pressbereich (2) zusätzlich den gesamten Bereich hinter der Öffnung (15) zwischen der Außenwand (5) und dem gegenüberliegenden Innenteil (4) umfasst.

9. Vorspannbare Elastomerbuchse nach Anspruch 7 oder 8, **dadurch gekennzeichnet, dass** die Wand oder ein Teil der Wand der Außenhülse (5) und / oder des Innenteils (4) oder der Innenhülse (4a) axial in Richtung des elastomeren Pressbereiches (2) durch besagte Pressmittel verschiebbar ist und diesen und die Elastomerschicht (1) dadurch verdichtet.

10. Vorspannbare Elastomerbuchse nach Anspruch 7 oder 8, **dadurch gekennzeichnet, dass** eine oder mehrere der Öffnungen (15) verbunden ist mit hydraulischen Spann- oder Pressmitteln (12,13,14) oder mechanischen Spann- oder Pressmitteln (21,22), durch welche die Vorspannung der elastomeren Bereiche (1) und (2) eingestellt und reguliert werden kann, wobei die mechanische Spann- und Pressmittel einen umlaufenden Kolbenring (21) oder ein oder mehrere Kolbenringsegmente (21) sowie eine oder mehrere Spannschrauben (22) umfassen können, welche radial im zu verspannenden Lagerteil (10) angeordnet sind und mit deren Hilfe der Kolbenring oder die Kolbenringsegmente in die Öffnungen (15) gepresst werden können.

11. Vorspannbare Elastomerbuchse nach Anspruch 1, **dadurch gekennzeichnet, dass** die als Pressbereich fungierende Elastomerschicht (2) im Inneren des Innenteils (4) angeordnet ist, welches mindestens eine radiale, mit elastomeren Material gefüllte Bohrung (18) in einer Ebene senkrecht zur Achse der Buchse (16) aufweist, die den elastomeren Pressbereich (2) mit der Elastomerschicht (1) verbindet.

12. Vorspannbare Elastomerbuchse nach Anspruch 11, **dadurch gekennzeichnet, dass** mindestens zwei radiale Bohrungen (18) im Innenteil (4) vorhanden sind, und das Pressmittel einen Kolben (19) und eine Spannschraube (7) umfasst, welche jeweils zentrisch und axial im Innenteil (4) angeordnet ist und bei axialem Verschieben in Richtung des Pressbereiches (2) das dort befindliche Elastomermaterial und über die Bohrungen (18) auch die Elastomerschicht (1) der Buchse (16) zu verdichteten oder zu dekomprimieren vermag, wodurch eine Verspannung der Buchse gegenüber dem Bauelement (10) bewirkt wird.

13. Vorspannbare Elastomerbuchse nach Anspruch 1, **dadurch gekennzeichnet, dass** der elastomere Pressbereich (25)(26) außerhalb der Buchse (16) im mit der Buchse zu verspannenden Bauteil (10) angeordnet ist, wobei der Pressbereich durch mindestens einen mit Elastomermaterial gefüllten Kanal (18) und einer entsprechend geformten Öffnung in der Wand der Außenhülse (5) mit der Elastomerschicht (1) im Inneren der Buchse in Verbindung steht und durch Press- und Spannmittel (7)(19)(20) (24), die auf dem Innenteil (4) und / oder dem Bauteil (10) angeordnet sind, verdichtet oder dekomprimiert werden kann.

14. Vorspannbare Elastomerbuchse nach Anspruch 13, **dadurch gekennzeichnet, dass** der elastomere Pressbereich (25) die Buchse (16) ganz oder segmentweise radial umschlingt, und die in gleicher Weise angeordneten umlaufenden Press- und Spannmittel einen Ringkolben (24) oder ein Segment eines Ringkolbens umfassen, welcher in den Elastomerbereich (25) durch die Spannmittel (7) gedrückt wird.

15. Vorspannbare Elastomerbuchse nach Anspruch 13, **dadurch gekennzeichnet, dass** der elastomere Pressbereich (25) im Bauteil (10) gebildet wird durch mindestens zwei axial angeordnete Bohrungen (26) im Bauteil (10), die mit kolbenförmigen Pressmitteln (19) und Spannmitteln (7) ausgestattet sind, wobei die Bohrungen um die Buchse (16) herum angeordnet sind, in welchen sich axial die Kolben (19) bewegen.

16. Vorspannbare Elastomerbuchse nach einem der Ansprüche 1 - 15, **dadurch gekennzeichnet, dass** die Außenhülse (5) der Buchse mindestens einen Längsschlitz (6) aufweist.

17. Lager, welches ausgestattet ist mit mindestens einer elastomeren Buchse gemäß der Ansprüche 1 - 16.

18. Verwendung einer elastomeren Buchse gemäß einem der Ansprüche 1-16 oder eines Lagers nach Anspruch 17 in Windkraftanlagen.

19. Windkraftanlage umfassend eine elastomere Buchse gemäß der Ansprüche 1 - 16 oder ein Lager nach Anspruch 17.

## Claims

1. Calibratable round elastomer bushing (16) which can be pretensioned in the installed state, comprising a deformable outer sleeve (5) and a compact flange-mountable inner part (4), both of which are connected to one another by an elastomer layer (1), **characterised in that** the bushing comprises an additional elastomer layer (2) (25) functioning as pressure region, which is connected to the elastomer layer (1) and is compressed by mechanical pressure or tensioning means (3) (4a) (5a) (8) (19) (21) (24) (12) (13) (7) (20) (21) (22), and/or hydraulic pressure or tensioning means (12) (13) (14) (17), so that the elastomer material forced out of the pressure region (2) and forced into the elastomer layer volume (1) compresses the elastomer layer (1) in order that the outside wall (5) of the bushing deforms radially outward, and thus causes tensioning of the bushing (16) with a surrounding component (10) which is connected to the bushing.

2. Pretensionable elastomer bushing according to Claim 1, **characterised in that** all or some of the additional elastomer layer (2) functioning as pressure region occupies a region of the elastomer layer (1) between the outside wall (5) and the inner part (4).

3. Pretensionable elastomer bushing according to Claim 1 or 2, **characterised in that** the flange-mountable inner part (4) is additionally surrounded by an inner sleeve (4a) of the same shape into which the inner part (4) fits accurately and which is connected to the elastomer (1) and the outer shell (5) of the elastomer bushing instead of the inner part (4).

4. Pretensionable elastomer bushing according to Claim 2 or 3, **characterised in that** the elastomer layer (2) functioning as pressure region is arranged on the outside of the inner part (4) or the inner sleeve (4a) and/or on the inside of the outer sleeve (5).

5. Pretensionable elastomer bushing according to Claim 4, **characterised in that** the pressure means is a sliding sleeve (3) which
(i) can be pushed axially along the inside of the outer sleeve (5) by the tensioning means (7) by the compression distance (9) into the elastomer region (2), or
(ii) partly surrounds the inner part (4) or the inner sleeve (4a), and can be pushed axially along same by the tensioning means (7) by the compression distance (9) into the elastomer region (2).

6. Pretensionable elastomer bushing according to Claim 5, **characterised in that** two opposing sliding sleeves (3) are mounted on the inner part (4) or the inner sleeve (4a) or on the inside wall of the outer sleeve (5).

7. Pretensionable elastomer bushing according to Claim 2, **characterised in that** the wall of the outer sleeve (5) or the wall of the inner sleeve (4a) or the outside wall of the inner part (4) has in the region of the elastomer layer (2) a circumferential or partly circumferential opening (15) which is filled with elastomer material, where this layer represents the pressure region (2).

8. Pretensionable elastomer bushing according to Claim 7, **characterised in that** the elastomeric pressure region (2) additionally comprises the entire region behind the opening (15) between the outside wall (5) and the opposing inner part (4).

9. Pretensionable elastomer bushing according to Claim 7 or 8, **characterised in that** the wall or a part of the wall of the outer sleeve (5) and/or of the inner part (4) or of the inner sleeve (4a) can be pushed axially in the direction of the elastomeric pressure region (2) by said pressure means and thus compresses it and the elastomer layer (1).

10. Pretensionable elastomer bushing according to Claim 7 or 8, **characterised in that** one or more of the openings (15) are connected to hydraulic tensioning or pressure means (12, 13, 14) or mechanical tensioning or pressure means (21, 22) by means of which the pretensioning of the elastomeric regions (1) and (2) can be adjusted and regulated, where the mechanical tensioning and pressure means may comprise a circumferential piston ring (21) or one or more piston ring segments (21) and one or more tensioning screws (22), which are arranged radially in the bearing part (10) to be tensioned and with the aid of which the piston ring or the piston ring segments can be pressed into the openings (15).

11. Pretensionable elastomer bushing according to Claim 1, **characterised in that** the elastomer layer (2) functioning as pressure region is arranged in the interior of the inner part (4), which has at least one radial hole (18) filled with elastomeric material in a plane perpendicular to the axis of the bushing (16), which hole connects the elastomeric pressure region (2) to the elastomer layer (1).

12. Pretensionable elastomer bushing according to Claim 11, **characterised in that** at least two radial holes (18) are present in the inner part (4), and the pressure means comprises a piston (19) and a tensioning screw (7), each of which is arranged centrally and axially in the inner part (4) and, on axial movement in the direction of the pressure region (2), is capable of compressing or decompressing the elastomer material located there and, via the holes (18), also the elastomer layer (1) of the bushing (16), effecting tensioning of the bushing against the component (10).

13. Pretensionable elastomer bushing according to Claim 1, **characterised in that** the elastomeric pressure region (25) (26) is arranged outside the bushing (16) in the component (10) to be tensioned by means of the bushing, where the pressure region is connected to the elastomer layer (1) in the interior of the bushing by at least one channel (18) filled with elastomer material and a correspondingly shaped opening in the wall of the outer sleeve (5) and can be compressed or decompressed by pressure and tensioning means (7) (19) (20) (24) which are arranged on the inner part (4) and/or the component (10).

14. Pretensionable elastomer bushing according to Claim 13, **characterised in that** the elastomeric pressure region (25) surrounds the bushing (16) entirely or radially in segments, and the surrounding pressure and tensioning means arranged in the same way comprise a ring piston (24) or a segment of a ring piston, which is forced into the elastomer region (25) by the tensioning means (7).

15. Pretensionable elastomer bushing according to Claim 13, **characterised in that** the elastomeric pressure region (25) in the component (10) is formed by at least two axially arranged holes (26) in the component (10), which are provided with piston-shaped pressure means (19) and tensioning means (7), where the holes are arranged around the bushing (16) in which the pistons (19) move axially.

16. Pretensionable elastomer bushing according to one of Claims 1 - 15, **characterised in that** the outer sleeve (5) of the bushing has at least one longitudinal slot (6).

17. Bearing which is fitted with at least one elastomeric bushing according to Claims 1 - 16.

18. Use of an elastomeric bushing according to one of Claims 1 - 16 or of a bearing according to Claim 17 in wind turbines.

19. Wind turbine comprising an elastomeric bushing according to Claims 1 - 16 or a bearing according to Claim 17.

## Revendications

1. Coussinet en élastomère rond calibrable (16) qui peut être mis en pré-tension dans l'état installé, comprenant une gaine externe déformable (5) et une partie interne compacte pouvant être montée sur flanc (4), les deux étant connectés l'un à l'autre par une couche en élastomère (1), **caractérisé en ce que** le coussinet comprend une couche en élastomère additionnelle (2) (25) jouant le rôle de région de pression, laquelle est connectée à la couche en élastomère (1) et est comprimée par des moyens de pression ou de mise sous tension mécanique (3) (4a) (5a) (8) (19) (21) (24) (12) (13) (7) (20) (21) (22) et/ou par des moyens de pression ou de mise sous tension hydraulique (12) (13) (14) (17), de telle sorte que le matériau d'élastomère forcé hors de la région de pression (2) et forcé à l'intérieur du volume de la couche en élastomère (1) comprime la couche en élastomère (1) afin que la paroi externe (5) du coussinet se déforme radialement vers l'extérieur et ainsi, provoque la mise sous tension du coussinet (16) à l'aide d'un composant d'entourage (10) qui est connecté au coussinet.

2. Coussinet en élastomère pouvant être mis en pré-tension selon la revendication 1, **caractérisé en ce que** la totalité ou une partie de la couche en élastomère additionnelle (2) qui joue le rôle de région de pression occupe une région de la couche en élastomère (1) entre la paroi externe (5) et la partie interne (4).

3. Coussinet en élastomère pouvant être mis en pré-tension selon la revendication 1 ou 2, **caractérisé en ce que** la partie interne pouvant être montée sur flanc (4) est de façon additionnelle entourée par une gaine interne (4a) de la même forme à l'intérieur de laquelle la partie interne (4) est ajustée de façon précise et qui est connectée à la couche en élastomère (1) et à la gaine externe (5) du coussinet en élastomère en lieu et place de la partie interne (4).

4. Coussinet en élastomère pouvant être mis en pré-tension selon la revendication 2 ou 3, **caractérisé en ce que** la couche en élastomère (2) qui joue le rôle de région de pression est agencée sur l'extérieur de la partie interne (4) ou de la gaine interne (4a) et/ou sur l'intérieur de la gaine externe (5).

5. Coussinet en élastomère pouvant être mis en pré-tension selon la revendication 4, **caractérisé en ce que** le moyen de pression est une gaine coulissante (3) qui :
(i) peut être poussée axialement le long de l'intérieur de la gaine externe (5) par le moyen de mise sous tension (7) sur la distance de compression (9) à l'intérieur de la région en élastomère (2), ou
(ii) entoure partiellement la partie interne (4) ou la gaine interne (4a),et peut être poussée axialement le long de l'intérieur de la gaine externe (5) par le moyen de mise sous tension (7) sur la distance de compression (9) à l'intérieur de la région en élastomère (2).

6. Coussinet en élastomère pouvant être mis en pré-tension selon la revendication 5, **caractérisé en ce que** deux gaines coulissantes opposées (3) sont montées sur la partie interne (4) ou sur la gaine interne (4a) ou sur la paroi interne de la gaine externe (5).

7. Coussinet en élastomère pouvant être mis en pré-tension selon la revendication 2, **caractérisé en ce que** la paroi de la gaine externe (5) ou la paroi de la gaine interne (4a) ou la paroi externe de la partie interne (4) comporte, dans la région de la couche en élastomère (2), une ouverture circonférentielle ou partiellement circonférentielle (15) qui est remplie de matériau d'élastomère, où cette couche représente la région de pression (2).

8. Coussinet en élastomère pouvant être mis en pré-tension selon la revendication 7, **caractérisé en ce que** la région de pression en élastomère (2) comprend de façon additionnelle la totalité de la région derrière l'ouverture (15) entre la paroi externe (5) et la partie interne opposée (4).

9. Coussinet en élastomère pouvant être mis en pré-tension selon la revendication 7 ou 8, **caractérisé en ce que** la paroi ou une partie de la paroi de la gaine externe (5) et/ou de la partie interne (4) ou de la gaine interne (4a) peut être poussée axialement dans la direction de la région de pression en élastomère (2) par ledit moyen de pression et ainsi, la comprime de même que la couche en élastomère (1).

10. Coussinet en élastomère pouvant être mis en pré-tension selon la revendication 7 ou 8, **caractérisé en ce qu'**une ou plusieurs des ouvertures (15) est/sont connectée(s) à des moyens de mise sous tension ou de pression hydraulique (12, 13, 14) ou à des moyens de mise sous tension ou de pression mécanique (21, 22) au moyen desquels la mise sous pré-tension des régions en élastomère (1) et (2) peut être ajustée et réglée, où les moyens de mise sous tension et de pression mécanique peuvent comprendre une bague de piston circonférentielle (21) ou un ou plusieurs segment(s) de bague de piston (21) et une ou plusieurs vis de mise sous tension (22), lesquelles sont agencées radialement dans la partie de palier (10) destinée à être mise sous tension et à l'aide desquelles la bague de piston ou les segments de bague de piston peut/peuvent être pressée/ pressés à l'intérieur des ouvertures (15).

11. Coussinet en élastomère pouvant être mis en pré-tension selon la revendication 1, **caractérisé en ce que** la couche en élastomère (2) qui joue le rôle de région de pression est agencée dans l'intérieur de la partie interne (4), laquelle comporte au moins un trou radial (18) rempli du matériau d'élastomère dans un plan perpendiculaire à l'axe du coussinet (16), lequel trou connecte la région de pression en élastomère (2) à la couche en élastomère (1).

12. Coussinet en élastomère pouvant être mis en pré-tension selon la revendication 11, **caractérisé en ce qu'**au moins deux trous radiaux (18) sont présents dans la partie interne (4), et le moyen de pression comprend un piston (19) et une vis de mise sous tension (7) dont chacun est agencé centralement et axialement dans la partie interne (4) et, lors d'un déplacement axial dans la direction de la région de pression (2), peut comprimer ou décomprimer le matériau d'élastomère situé à ce niveau et, via les trous (18), également la couche en élastomère (1) du coussinet (16), d'où la mise sous tension effective du coussinet contre le composant (10).

13. Coussinet en élastomère pouvant être mis en pré-tension selon la revendication 1, **caractérisé en ce que** la région de pression en élastomère (25) (26) est agencée à l'extérieur du coussinet (16) dans le composant (10) destiné à être mis sous tension au moyen du coussinet, où la région de pression est connectée à la couche en élastomère (1) dans l'intérieur du coussinet par au moins un canal (18) rempli de matériau d'élastomère et par une ouverture conformée en correspondance dans la paroi de la gaine externe (5) et peut être comprimée ou décomprimée par les moyens de pression et de mise sous tension (7) (19) (20) (24) qui sont agencés sur la partie interne (4) et/ou le composant (10).

14. Coussinet en élastomère pouvant être mis en pré-tension selon la revendication 13, **caractérisé en ce que** la région de pression en élastomère (25) entoure le coussinet (16) en totalité ou radialement par segments, et les moyens de pression et de mise sous tension d'entourage agencés de la même façon comprennent un piston de bague (24) ou un segment de piston de bague, lequel est forcé à l'intérieur de la région en élastomère (25) par les moyens de tension (7).

15. Coussinet en élastomère pouvant être mis en pré-tension selon la revendication 13, **caractérisé en ce que** la région de pression en élastomère (25) dans le composant (10) est formée par au moins deux trous agencés axialement (26) dans le composant (10), lesquels sont munis d'un moyen de pression en forme de piston (19) et d'un moyen de mise sous tension (7),où les trous sont agencés autour du coussinet (16), trous à l'intérieur desquels les pistons (19) se déplacent axialement.

16. Coussinet en élastomère pouvant être mis en pré-tension selon l'une des revendications 1 - 15, **caractérisé en ce que** la gaine externe (5) du coussinet comporte au moins une fente longitudinale (6).

17. Palier qui reçoit en ajustement au moins un coussinet en élastomère selon les revendications 1 - 16.

18. Utilisation d'un coussinet en élastomère selon l'une des revendications 1 - 16 ou d'un palier selon la revendication 17 dans des éoliennes.

19. Eolienne comprenant un coussinet en élastomère selon les revendications 1-16 ou un palier selon la revendication 17.
